# EUROPEAN PATENT APPLICATION

(11) **EP 0 784 400 A2**
(43) Date of publication of application: **16.07.1997**
(21) Application number: 96309406.5
(22) Date of filing: 23.12.1996
(51) Int. Cl.: H04N 5/44

(54) **Entertainment system for portable computer**

(30) Priority: 11.01.1996 US 587871
(71) Applicant: International Business Machines Corporation, Armonk, N.Y. 10504 (US)
(72) Inventor: Wong, Danny Chan Yong, Ringwood, New Jersey 07456 (US)
(74) Representative: Jennings, Michael John

(57) **Abstract**

A portable computer is provided with a multi-media entertainment system wherein all hardware including electronic circuits and other components for the entertainment system are fully integrated in a notebook computer. The invention integrates television electronics (1), AM/FM radio circuits (4), a CD- ROM (compact disk-read only memory) drive, (8) miniaturized 8-mm VCR (7) into a notebook computer, such as an IBM Thinkpad 750C computer. Software running on the notebook computer provides a graphical user interface wherein the user can use a key stroke, mouse, or track point to tune to different channels or adjust the volume, brightness, contrast, or play, stop/eject, fast-forward, pause, and rewind using icons which mimic controls that might be found on a conventional television, radio, VCR or CD-ROM drive.

## Description

The present invention generally relates to lightweight, portable computers and, more particularly, to an entertainment system which is fully integrated into the portable computer and supported by software running on the computer.

### BACKGROUP DESCRIPTION

Small portable computers, sometimes referred to as notebook computers, are commonly used in a variety of demanding environments for productivity and convenience. The progress of computer technology has made notebook computers small, yet powerful enough to use in many different physical environments such as, for example, at home, in vehicles, or even outdoors.

Often, notebook computers are carried by professional or business users when they travel. During such occasions, particularly in airports, users have long periods when they are simply passing time. Hence, it would be advantageous to integrate an entertainment system into a notebook computer to thereby allow a user, waiting to board an airplane, to watch television, watch a movie, or listen to music.

In the past, devices have been developed to occupy and entertain travelers. For example, U.S. Patent 4,521,021 to Dixon shows a video game table for airplanes in which a video console attaches to the seat backs to form a table for playing video games from video cartridges. While entertaining, this approach is not portable and limited to playing video games in passenger vehicles so equipped.

U.S. Patent 4,866,515 to Tagawa et al. shows a passenger service and entertainment system for supplying frequency-multiplexed video, audio, and television game software signals to user's seats. The system consists of a central transmitting apparatus and a plurality of cathode ray tube (CRT) or liquid crystal display (LCD) terminal units mounted in seats, such as, for example, airplane seats, stadium seats, or theater seats. The central transmitting apparatus of the system distributes video signals, audio signals, and television game software signals to the terminal units through frequency-multiplexing. Both the central transmitting apparatus and each of the terminals are permanently located at a fixed location.

Similarly, the marriage of desk-top computers and television has been experimented with in the past with very limited applications. For example, U.S. Patent 5,374,952 to Flohr shows a video conferencing system for fixed location computer workstations that operates on local area networks to exchange data and to transmit cable television signals via a coaxial cable television wire.

Likewise, U.S. Patents 5,359,367 to Stockhill, 5,249,164 to Koz, and 5,283,819 to Glick et al. show personal desk-top computers with added television capabilities. An obvious drawback to all of these devices is that desk-top computers cannot be carried around. Furthermore, only partial hardware is include and, therefore, still requires the user to provide the necessary video signal source such as an external antenna, or a video cassette recorder (VCR) input in order to function.

### SUMMARY OF THE INVENTION

In a first aspect, the present invention provides an entertainment system which is fully integrated into a computer and supported by software running on the computer. The invention provides An entertainment system integrated into a portable computer, comprising: at least one of a television receiver and a radio receiver; and a built-in antenna mounted to said portable computer for providing broadcast signals to one of said television receiver and said radio receiver.

According to a preferred embodiment of the invention, all hardware, including electronic circuits and other components, for the entertainment system is fully integrated in a notebook computer. More specifically, the invention integrates television electronics, AM/FM radio circuits, a CD-ROM (compact disk-read only memory) drive, and a miniaturized 8-mm VCR into a notebook computer, such as an IBM Thinkpad 750C computer. The entertainment system takes advantage of the ultra- high resolution thin film transistor, liquid crystal display (TFT/LCD) which is already part of modern notebook computers. Hence, the entertainment system can be integrated into the notebook computer at minimum cost.

The entertainment system comprises of a television, radio, removable CD-ROM audio and/or video disc, and a removable 8-mm VCR. Software running on the notebook computer provides a graphical user interface wherein the user can use a key stroke, mouse, or track point to tune to different channels and adjust the volume, brightness, and contrast using icons which mimic controls that might be found on a conventional television, radio, VCR or CD-ROM drive. In addition, the software has the capability of displaying the television image in a separate window on the display while simultaneously displaying information on applications running in other windows.

### BRIEF DESCRIPTION OF THE DRAWINGS

The foregoing and other aspects and advantages will be better understood from the following detailed description of a preferred embodiment of the invention with reference to the drawings, in which:
Figure 1 is a block diagram showing the architecture of the entertainment system according the invention;
Figure 2 is a pictorial view of a notebook computer incorporating the television and the AM/FM radio circuitry of the entertainment system according to the invention;
Figure 3 is a pictorial view of a notebook computer shown in Figure 2 having its floppy diskette drive replaced with a VCR or CD-ROM drive;
Figure 4 is a pictorial view of a notebook computer shown in Figure 2 having its floppy diskette drive replaced with a VCR and its removable hard drive replaced with a CD-ROM drive;
Figure 5 is a block diagram showing the video and audio circuits of the television receiver of the entertainment system;
Figure 6 is a block diagram of the radio receiver of the entertainment system;
Figure 7 is a block diagram showing the combined audio output of the entertainment system;
Figures 8 is a flow diagram showing the logic of the software running on the notebook computer that controls the entertainment system;
Figure 9 is the entertainment system main selection screen;
Figure 10 is an illustration of the television control graphical user interface screen;
Figures 11A-11B are a flow diagram showing the logic of the software running on the notebook computer that controls the television receiver;
Figure 12 is an illustration of the AM/FM radio control graphical user interface screen;
Figure 13 is a flow diagram showing the logic of the software running on the notebook computer that controls the AM/FM radio receiver;
Figure 14 is an illustration of a combined VCR/CD-ROM control graphical user interface screen;
Figure 15 is a flow diagram showing the logic of the software running on the notebook computer that controls the CD-ROM drive; and
Figure 16 is a flow diagram showing the logic of the software running on the notebook computer that controls the VCR.

### DETAILED DESCRIPTION OF A PREFERRED EMBODIMENT OF THE INVENTION

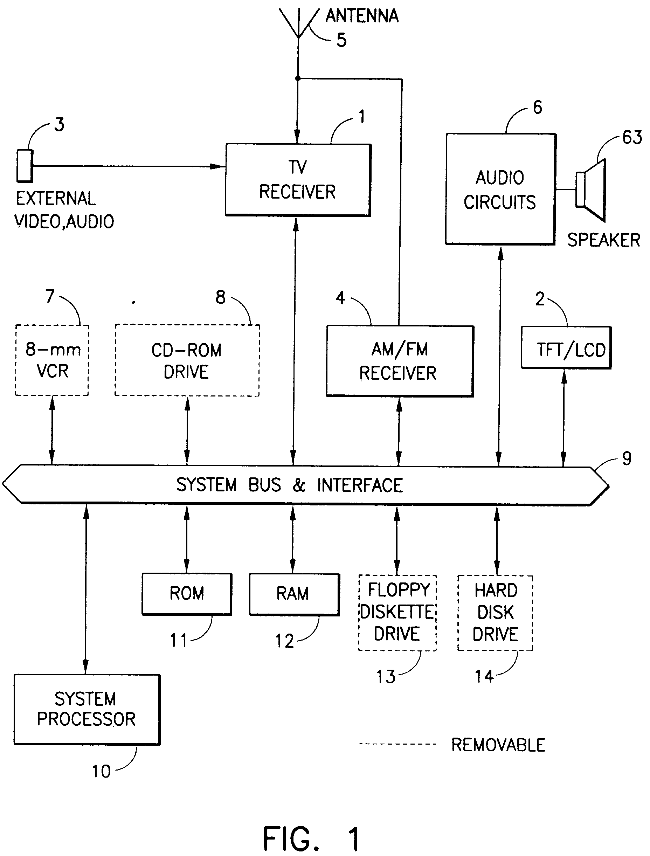

Referring now to the drawings, and more particularly to Figure 1, there is shown a system block diagram of the entertainment system integrated into a notebook computer according to a preferred embodiment of the present invention. As shown in Figure 1, the television receiver 1 and accompanying circuitry receive a plurality of broadcast television signals from either an external source connected to jack 3 or an antenna 5 to provide a television picture which can be displayed on an inset of a computer display 2. It is important that a built-in antenna be provided since, in order to be fully portable, a constant source of broadcast signals must be available. In the preferred embodiment of the invention, the display used is a 12.1 inch color thin film transistor/liquid crystal display (TFT/LCD), as used in the IBM Thinkpad notebook computer.

An 8-mm VCR 7 or a CD-ROM drive 8 provide alternate sources for video signals. Each of the television receiver 1, the 8-mm VCR 7, and the CD-ROM drive 8 are connected to the display 2 via the system bus 9 of the notebook computer. The 8-mm VCR 7 may be built into the notebook computer but is typically added to it as a detachable module, as indicated by the dashed lines. The CD-ROM drive 8, which may also be built into the notebook computer but, again, is typically a detachable module, is capable of playing computer CD-ROMs, audio CDs as well as the newer MPEG video CDs.

The antenna 5 is also connected to an AM/FM receiver 4. The audio output of the AM/FM receiver 4 as well as the audio output from television receiver 1, 8mm VCR 7, and CD-ROM drive 8 are supplied to audio circuits 6 providing an output to a speaker 63 or, selectively, an earphone (not shown).

The notebook computer includes a system processor 10, such as an Intel Pentium^{■} or IBM PowerPC^{■} microprocessor. The system processor is supported by read only memory (ROM) 11, which stores the basic input/output system (BIOS), and random access memory (RAM) 12, which stores portions of the operating system (OS) and application programs. Also, the notebook computer has a hard disk drive 14 having sufficient capacity to support multimedia programs run on the computer. The hard disk drive 14 may be augmented by a second hard disk drive 15 in the form of a detachable module, as indicated by the dashed lines. In addition, a floppy diskette drive 13, which may be built into the notebook computer but is typically provided as a detachable module, is provided to receive input from removable diskettes.

Software, shown in the flow charts discussed below, running on the system processor 10 is used to control the display of a television picture in association with the computer operating system (OS) software that enables the computer to undertake other functions concurrently. The quality of the television picture, contrast, brightness, volume, and channel selection can be operated by using a mouse (or track point in IBM Thinkpad notebook computer) or keyboard. Similarly, software is used to control the other multimedia functions, as will be described in more detail.

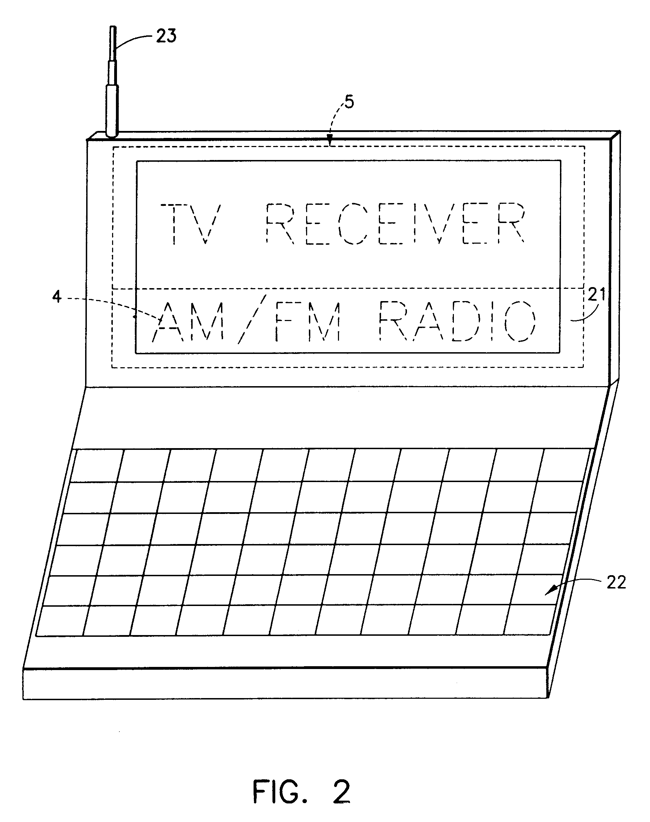

Figure 2 is a pictorial diagram of a notebook computer 20 of the type which may incorporate the entertainment system according to the invention. The notebook computer has a TFT display 21 and a keyboard 22. Outwardly, the notebook computer looks very much like any other notebook computer with the exception of the added telescoping antenna 23, which is conveniently housed in an edge of the fold-up TFT display 21. It will be understood that other types of extendable antenna, such as spring-loaded rabbit ears, may be used. In the preferred embodiment, the television receiver circuitry and the AM/FM radio circuitry 4 is positioned behind the TFT display 21.

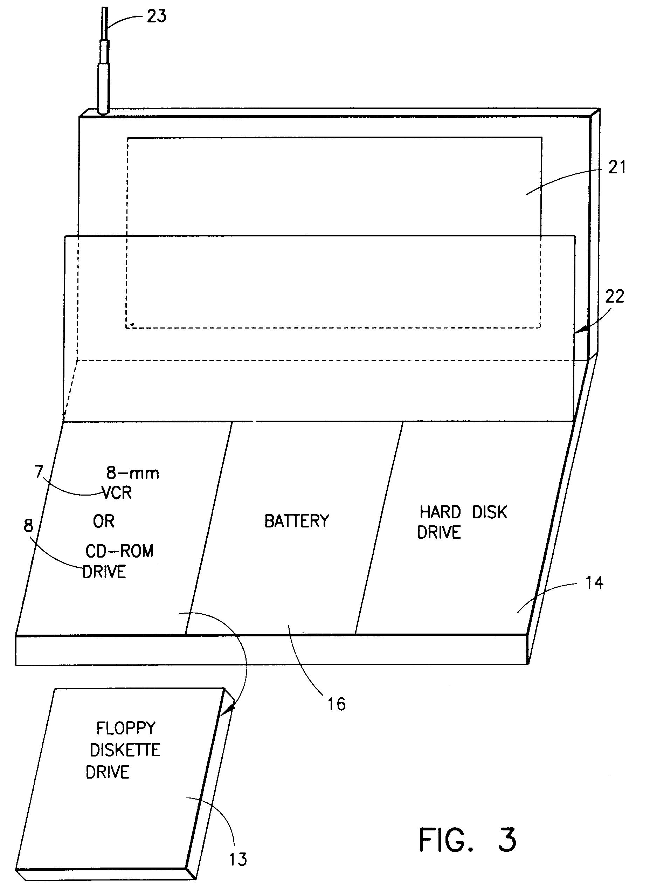

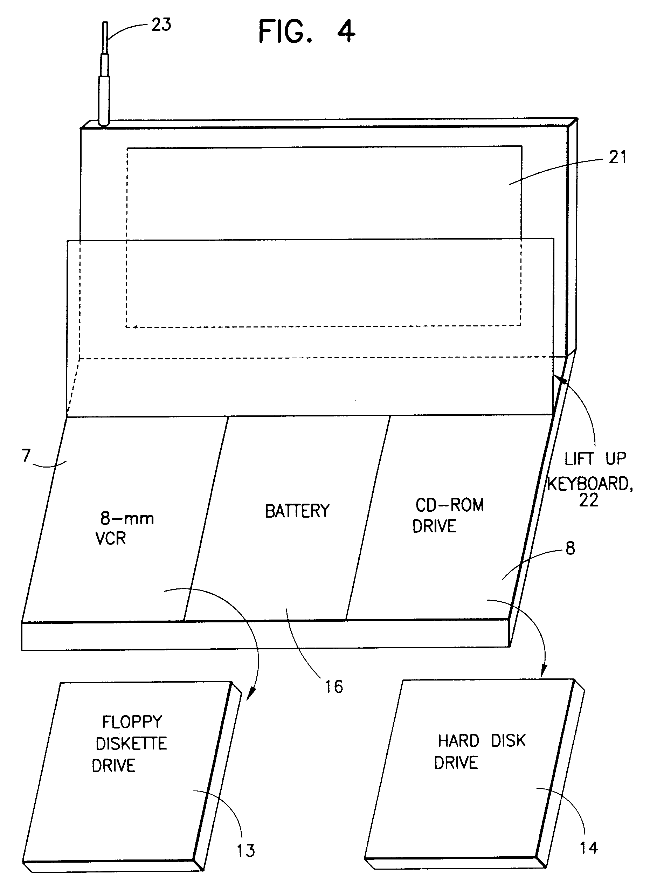

Figures 3 and 4 show a view of the IBM Thinkpad 750C computer with the keyboard 22 lifted to allow access to the removable modules. In Figure 3, a battery 16, and a hard-disk drive 14 are shown with a floppy diskette drive 13 removed to make room for either the 8mm VCR 7 or the CD-ROM drive 8. In Figure 4, a configuration is shown where the floppy diskette drive 13 is swapped for the 8-mm VCR 7, and the removable hard disk drive 14 is swapped for the CD-ROM drive 8. The removable hardware allows the entertainment system to be contained in one compact easy to carry chassis and provides the options for users to choose whether to use these the additional entertainment functions or not. The removable 8-mm VCR 7 and CD-ROM 8 can operate as entertainment functions which send video signals to television receiver 1 circuits for processing and displaying onto the TFT/LCD display 2 and audio signals to the audio circuit 6, or can function as storage devices via the Small Computer System Interface (SCSI) and system bus 9 to communicate with the notebook computer's standard ports, such as the system microprocessor 10, RAM 12, and serial and parallel ports (not shown) for other computer tasks.

The additional hardware of the notebook entertainment system does not substantially increase the power consumption for normal usage. This is because the TFT/LCD display 2, which is used for both computing and entertainment, typically consumes the most power of any component (typical power consumption 5.65 watt in battery mode , 8.95 watt in AC adaptor mode). The power to the unused part of the system, whether used as a computer system or entertainment system, can be turned off if not in use to save power.

The total weight of the electronic circuits of the television receiver 1, the AM/FM receiver 4, and the antenna 5, is estimated to be 8 ounces. Since audio circuits and TFT/LCD display controller circuits are already part of the notebook computer, the television receiver 1 and AM/FM receiver 4 radio may exploit these existing circuits and therefore add only minimum weight to the notebook computer.

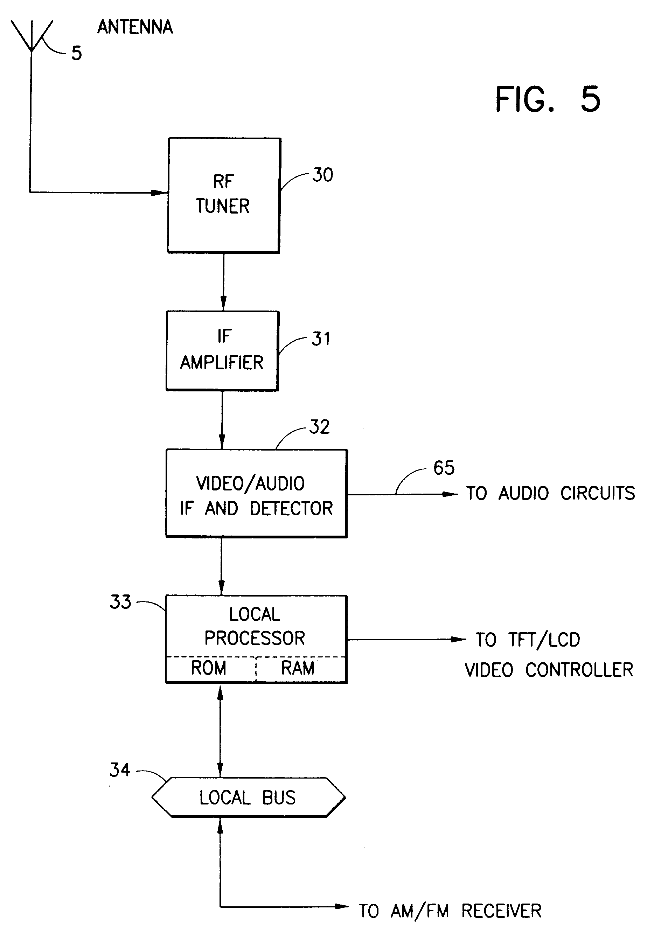

Figure 5 shows a detailed block diagram of the television receiver 1, shown in Figure 1. The television receiver 1 is comprises an RF (radio frequency) tuner 30 which includes electronic tuning circuits, video/audio IF (intermediate frequency) and detector circuit 32, and local processor 33 which performs signal conditioning and converts NTSC (National Television System Committee) signals to digital RGB (red-green-blue) signals. To receive broadcast television signals, the antenna 5 picks up an incoming RF signal and the RF tuner 30 tunes the VHF/UHF bands. The television receiver can be scanned electronically and continuously under the control of software until a detectable channel is captured by the RF tuner's 30 electronic tuning circuits. It is desirable to have the option of the electronic scanning for television reception since the portable entertainment system with the notebook computer may be used in a location of television channel selection unfamiliar to the user.

The desired television channel may also be selected directly by using keyboard or mouse through the software. Once the incoming RF signal from the antenna 5 is converted to an IF signal, the IF signal output from the RF tuner 30 is fed to an IF amplifier 31 to be amplified. The amplified IF signal is then passed into the video/audio IF and detector 32 which can be implemented by an integrated circuit such as the TA8680 from Toshiba or other off-the-shelf electronic components. The audio signal can he extracted by the video/audio IF and detector 32 from the amplified IF signal as an intercarrier component at 4.5 MHz. While the desired output of the audio signal from the video/audio IF and detector 32 is input to the audio circuit 6 (Figure 1) for audio processing and output to the speaker 64, the video output signal from the video/audio IF and detector 32 is input to the local processor 33 to be further processed and converted to digital RGB signals, with 6-bits for each of the RGB signals. The RGB data is supplied to the TFT/LCD controller of the notebook computer display.

External connectors for audio and video inputs are also available. For example, a video camera recorder may provide the video and audio signals to the entertainment system and use the TFT/LCD display 2 for displaying its video picture. External video and audio inputs are connected to the video/audio IF amplifier 31 and the external video and audio signals are further processed in the same fashion as a broadcast television signal.

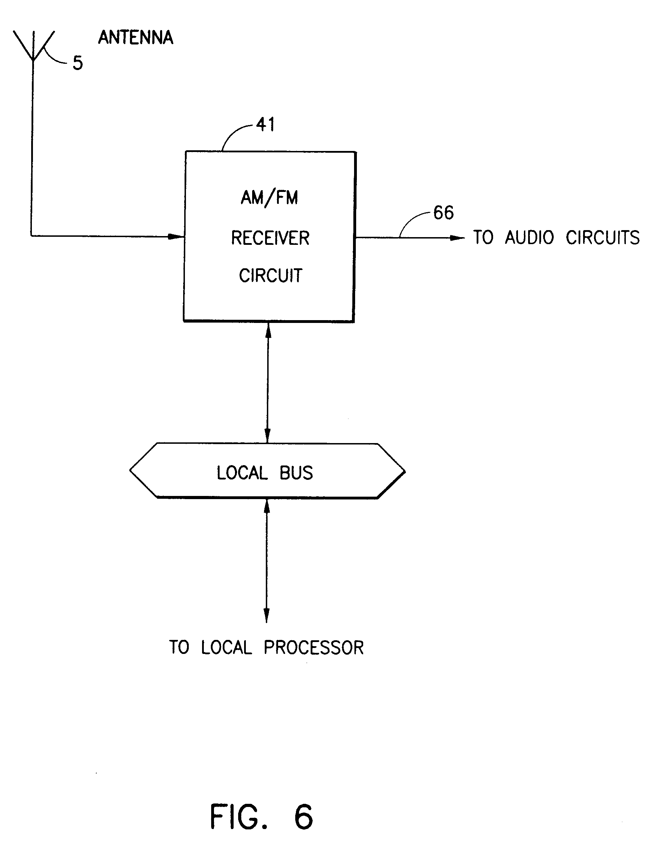

Referring now to Figure 6, the AM/FM radio receiver circuit 41 shares the local processor 33, the local bus 34 and the antenna 5 with the television receiver l. The AM/FM radio receiver circuit 41 can be implemented with an integrated circuit in a single package which is readily available as an off-the-shelf item such as radio module TEA5757 from Phillips. The notebook computer entertainment system software and the local processor 33 help to provide the following additional functions from the AM/FM receiver circuit 41, which can be operated from mouse/keyboard 22 of the system. The functions include automatic electronic tuning, volume, scanning, preset and AM/FM channel selections.

A difficulty with embedding the combination of entertainment system and notebook computer into a single notebook computer chassis is the packaging of all the hardware of the entertainment system with the hardware of the notebook computer due to the constraints of space availability and light weight of the entire notebook computer system. A solution provided by the present invention is maximization of the shared use of hardware and circuits; for example, referring back to Figure 1, the television receiver 1 and the AM/FM radio 4 share the same antenna 5 and audio circuits 6.

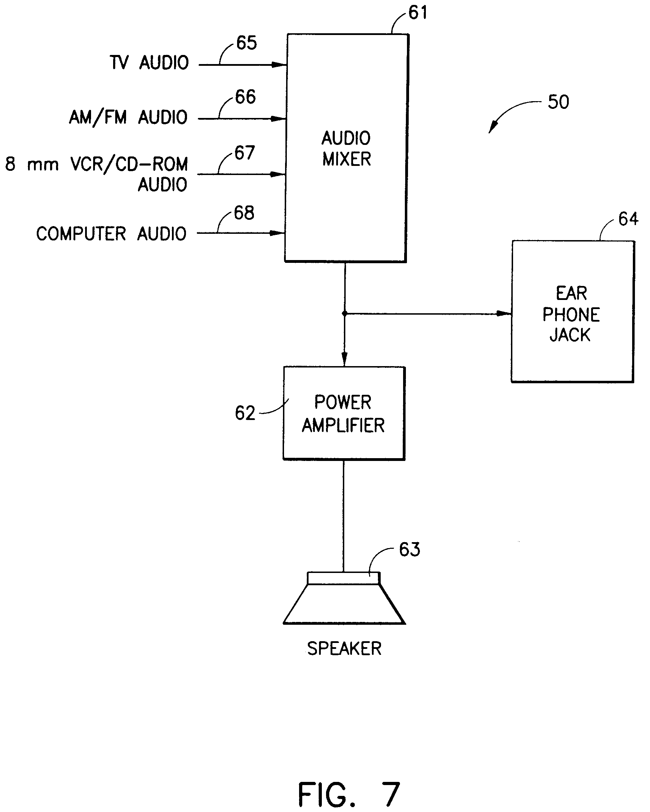

Referring now to Figure 7, in a similar manner, a single audio circuit 50 including an audio mixer 61, audio amplifier 62, earphone jack 64, and speaker 63 is shared by all the entertainment functions and system computer. The audio mixer 61 selects an audio input from either the TV audio 65, the AM/FM radio audio 66, the 8mm VCR/CD-ROM audio 67, or the computer audio 68. The output of the audio mixer 61 is input to the earphone jack 64 and to the power amplifier 62 for amplification to the speaker 63 to provide sound for the entertainment system.

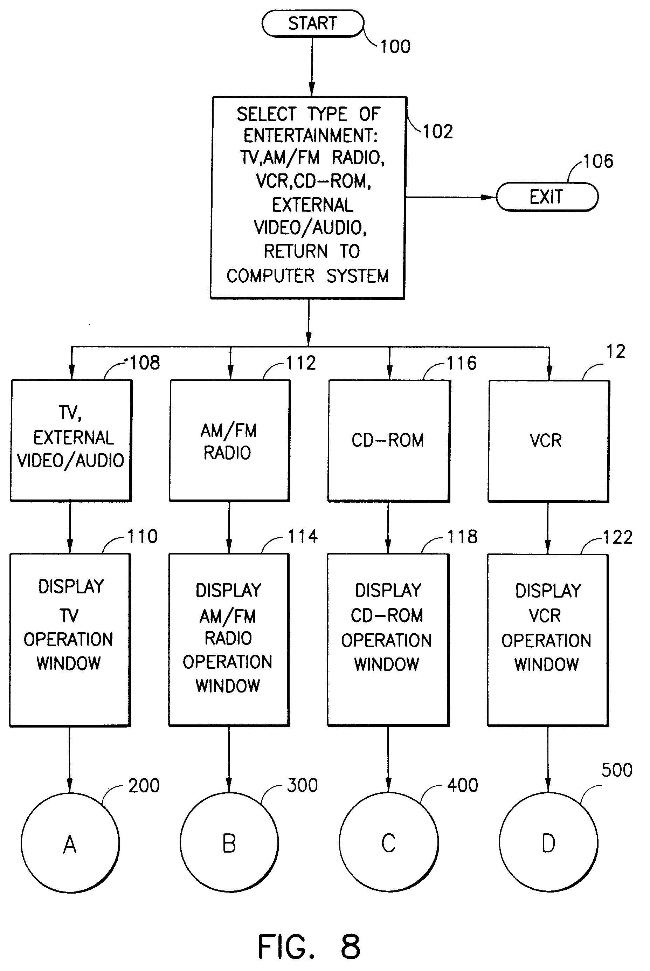

As mentioned above, software running on the microprocessor is used to control the entertainment functions. Figures 8 to 15 show the software flow diagrams as well as illustrate the various user controls for selecting between and controlling the individual entertainment components. Starting at block 100 at Figure 8, and proceeding immediately to block 102, the user is requested to input a selection for the type of entertainment that is desired. That is, television, AM/FM radio, CD-ROM, or VCR.

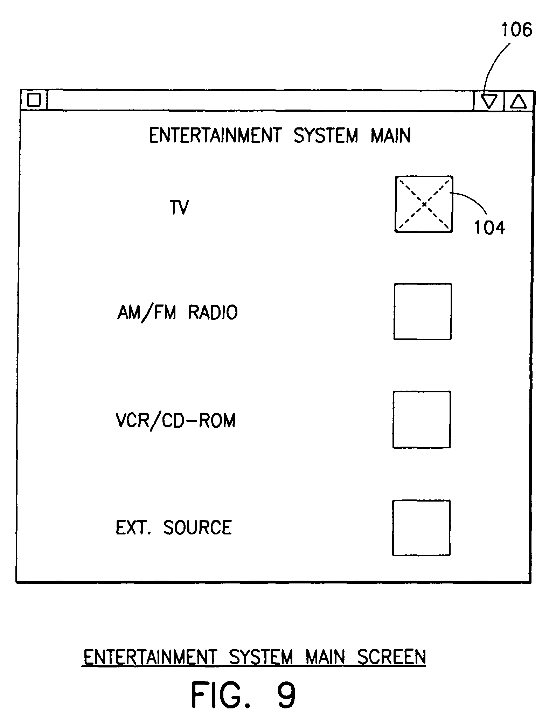

Figure 9 shows an example of a graphical selection screen that may be displayed for the user to pick from. In this example, the television has been selected by marking the box 104 adjacent to the television selection. If at this point if it is desired to exit the entertainment system, the down arrow 106 may be selected. Selections may be made by the user by, for example, key-stroke, mouse, trackball, or (or track point in IBM Thinkpad notebook computer), touch screen, or any other input means.

Referring back to Figure 8, if the down arrow of Figure 9 had been chosen, the software would exit at block 106. Similarly, if the television had been selected the flow diagram proceeds to block 108 and displays the television operation window at block 110. If the AM/FM radio had been selected then proceed to block 112 and display the AM/FM radio operation window at block 114. If the CD-ROM drive had been selected then proceed to block 116 and display the CD/ROM operation window at block 118. Finally, if the VCR had been selected then proceed to block 120 and display the VCR operation window at block 122.

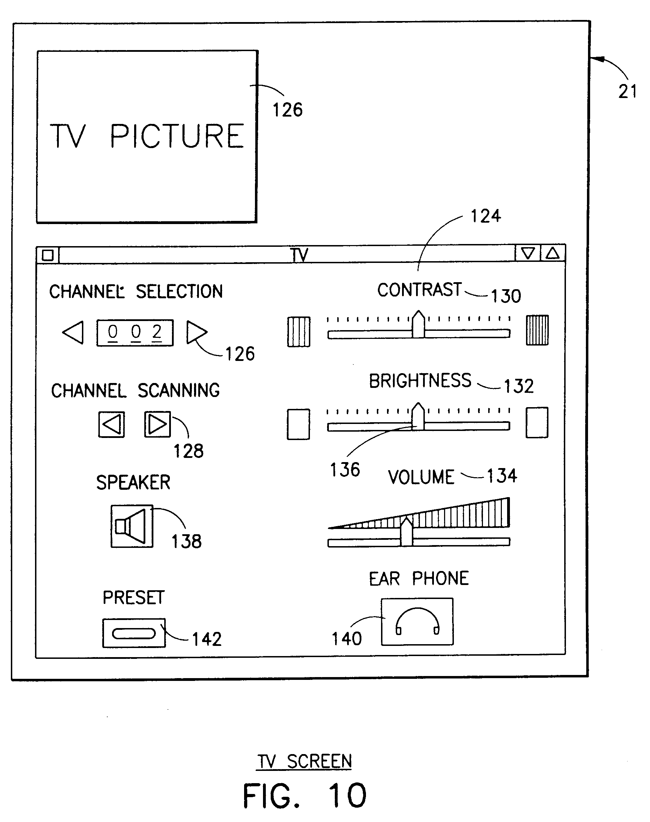

Figure 10 shows an example of the television operation control window 124 and television picture window 126 opened on the computer display screen 21. It is noted that an application program may be simultaneously running and displayed in the background display. The television operation window 124, as well as all of the other operation windows described below, is a graphical interface showing the traditional controls that one would find on a conventional television including contrast 130, brightness 132, and volume controls 134. A mouse or track-point may be used to drag the control arrows 136 to adjust these controls. A channel tuner 126 is used to change the television channel. The user simply cursors to the tuner 126 and types in a television channel number. Similarly, the arrow icons located on either side of the tuner 126 may be used to increment or decrement the channel selection by clicking on the arrow icons. Likewise, channels may be scanned by clicking on the scanning icons 128. The television audio can either be sent to a speaker or to an earplug by clicking on the respective icons 138 or 140. A preset icon 142 may also be displayed for resetting all of the controls to a default setting.

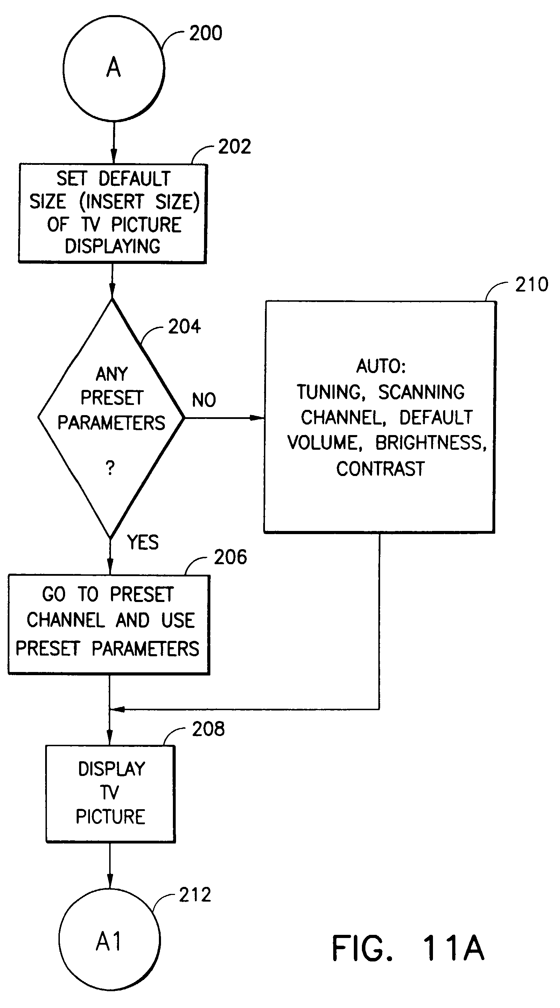

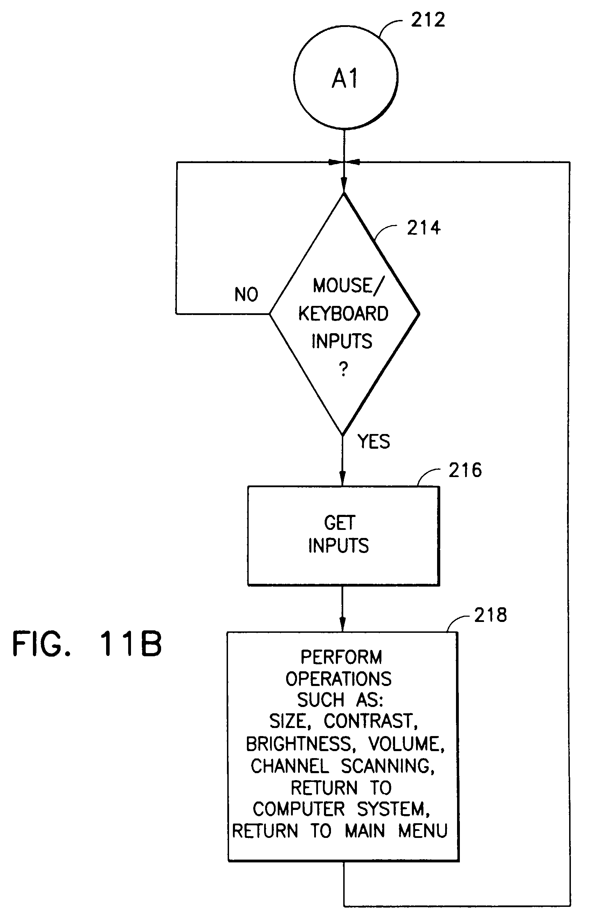

The flow diagram shown in Figures 11A and 11B illustrate the steps taken when the television is selected and continue from block 200 in Figure 8. At block 202 the default size of the television picture, 126 from Figure 10 is set. At decision block 204 if the user has previously preset parameters, such as locked-in channels for a particular viewing area, those preset parameters are observed at block 206 and the preset television channel is displayed at block 208. If, on the other hand, at decision block 204 it is determined that there are no preset parameters, then an auto tuning function may take place where all of possible channels are scanned for activity and those which are determined active are locked, the default picture parameters are set at block 210 and the picture is again displayed at block 208.

Referring now to Figure 11B, and continuing from block 212 at decision block 214, the user inputs such as channel tuning, channel scanning, volume, brightness and contrast are read from screen 124. If such an input is detected, then the input is read at 216 and the requested operation is performed at 218. The routine is then returned to the top of decision block 214.

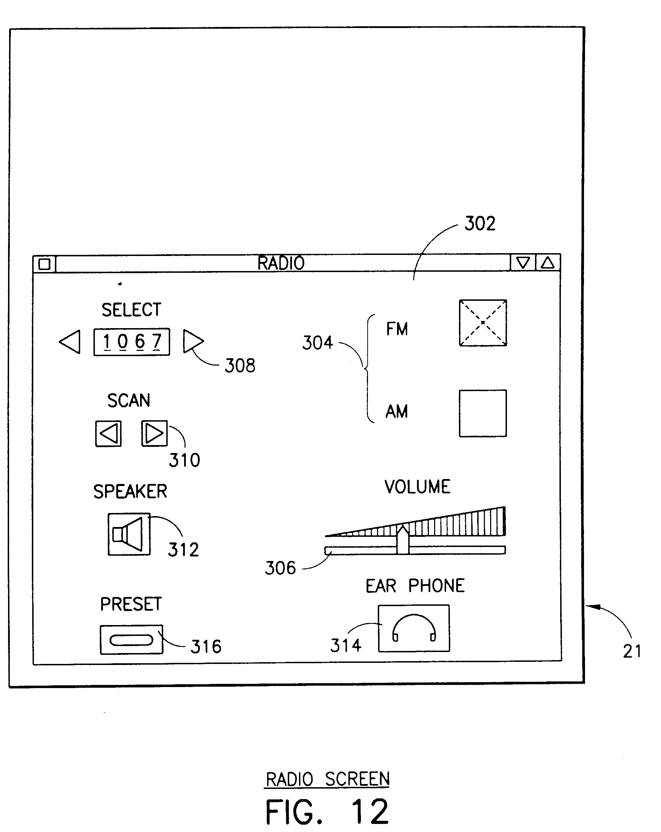

Figure 12 shows an example of an AM/FM radio operation window 302 opened on the computer display screen 21. The AM/FM radio operation window 302 is a graphical interface showing the traditional controls that one would find on a typical AM/FM radio including AM/FM band selector 304, volume controls 306, tuner 308, scan controls 310, speaker 312 or ear phone 314 controls and a preset button 316. Again, a mouse or track-point may be used to drag the control arrows 136 to adjust these controls.

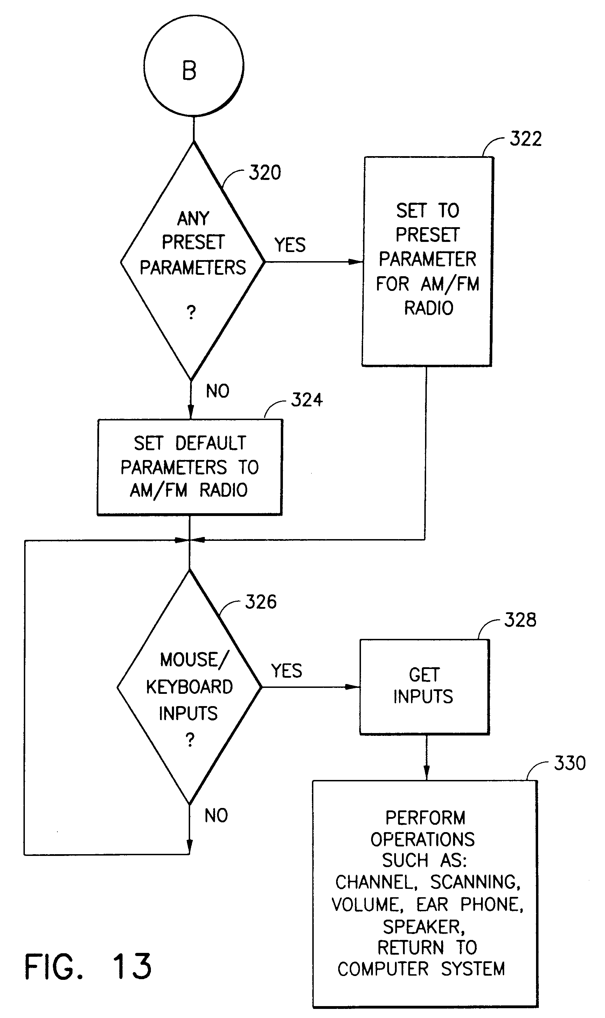

The flow diagram shown in Figure 13 illustrates the steps taken when the AM/FM radio is selected and continue from block 300 in Figure 8. Proceeding to decision block 320, it is determined if there are any preset parameters for the controls shown in Figure 12. If yes, the preset parameters are observed at block 322. If no, the default parameters are set at block 324. At decision block 326 if any user inputs are detected, then the inputs are read at block 328 and the operation input from the AM/FM radio operation window 302 is performed at block 330.

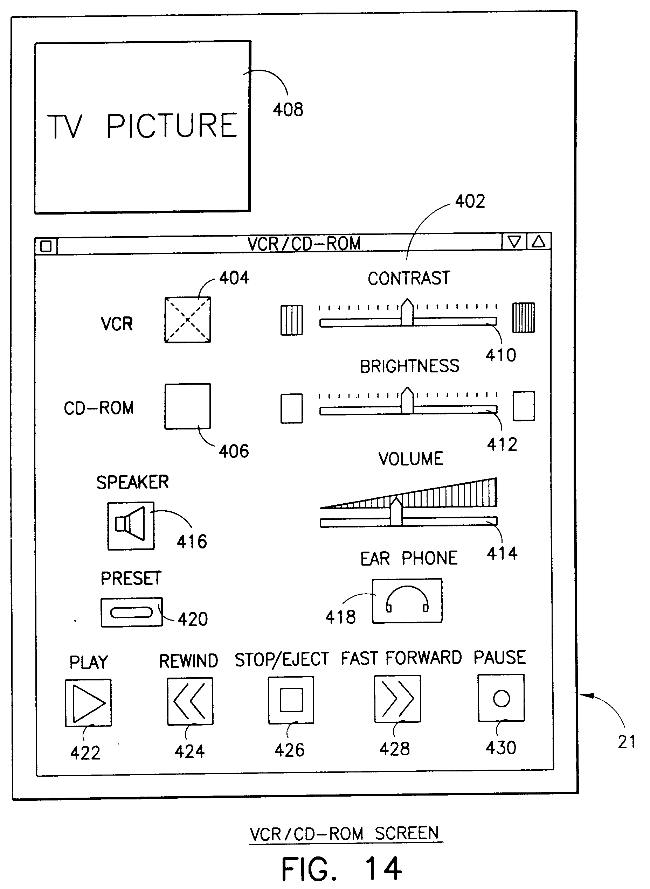

Figure 14 shows an example of the VCR/CD-ROM operation window 402 opened on the computer display screen 21. The VCR/CD-ROM operation window 402, is a graphical interface shared for both the VCR functions and the CD-ROM functions and the user selects between the two by clicking on either the VCR box 404 or the CD-ROM box 406. The television display window 408 as well as the contrast control 410, brightness control 412, volume control 414, speaker or ear phone selection icon 416 and 418 and presets are analogous to those described above with reference to the television operation window 124 shown in Figure 10. In addition, icons for traditional controls that one would find on a typical VCR or CD-ROM player including play 422, rewind 424, stop/eject 426, fast forward 428, and pause 430 are included. A mouse or track-point may be used to drag the control arrows 136 to adjust these controls.

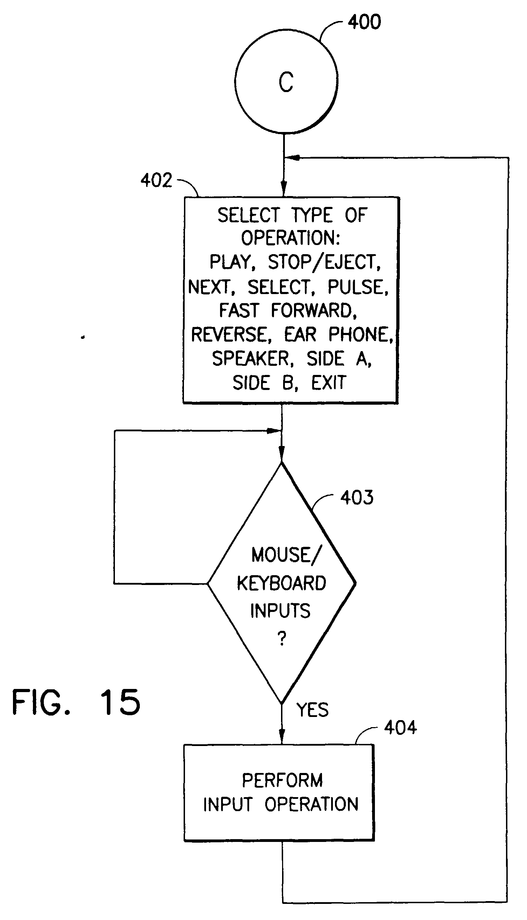

Figure 15 shows a flow diagram to illustrate the steps taken when the CD-ROM is selected and continue from block 400 in Figure 8. At block 402, the type of operation is read from the user input obtained from the VCR/CD-ROM operation window 402, such as, for example, play, stop/eject, next, select, pause, fast-forward, reverse, speaker, select side A/B, exit, and the like. At decision block 403, user inputs selections from block 402 are detected and, accordingly, in block 404 the user input operation is performed.

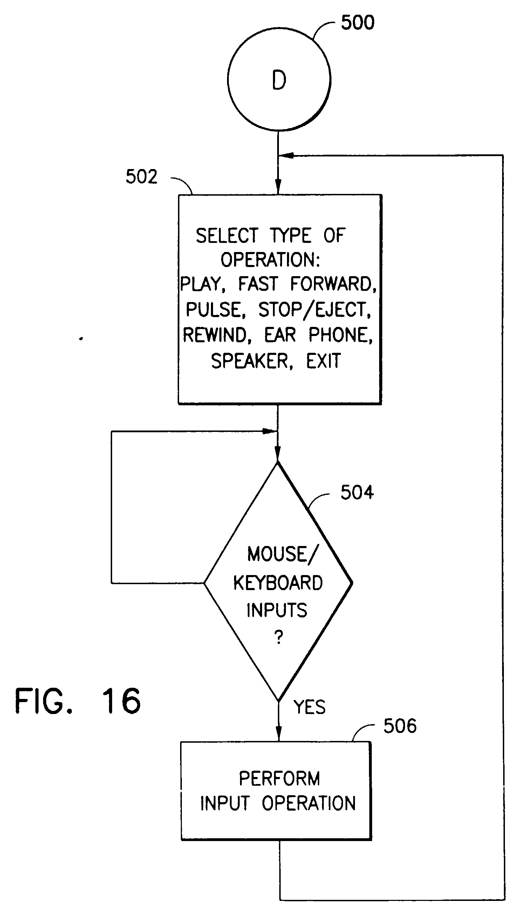

Figure 16 shows a flow diagram to illustrate the steps taken when the VCR is selected and continue from block 500 in Figure 8. At block 505 the type of operation is read from the user input obtained from the VCR/CD-ROM operation window 502, such as, for example, play, stop/eject, next, select, pause, fast- forward, rewind, speaker, and the like. At decision block 504, user inputs selections from block 502 are detected and, accordingly, in block 506 the user input operation is performed.

While the invention has been described in terms of a single preferred embodiment, those skilled in the art will recognize that the invention can be practiced with modification within the spirit and scope of the appended claims.

## Claims

1. An entertainment system integrated into a portable computer, comprising:
at least one of a television receiver (1) and a radio receiver (4); and
a built-in antenna (5) mounted to said portable computer for providing broadcast signals to one of said television receiver and said radio receiver.

2. An entertainment system integrated into a portable computer as recited in claim 1 further comprising:
at least one modular slot adapted to fit one of a floppy diskette drive (13) , a hard-disk drive (14), a compact disk-read only memory (CD-ROM) drive (8), and a video cassette recorder (VCR) (7).

3. An entertainment system integrated into a portable computer as recited in claim 2 wherein said antenna is a telescoping antenna extending from a display lid of said portable computer.

4. An entertainment system integrated into a portable computer, as recited in claim 3 wherein said telescoping antenna is in the form of rabbit ears.

5. An entertainment system integrated into a portable computer as recited in any one of claims 2 to 4, further comprising a keyboard which is hinged to provide access to said modular slot.

6. An entertainment system integrated into a portable computer as recited in any one of claims 1 to 5 wherein at least one of said television receiver and said radio receiver are housed in a display lid of said portable computer.

7. An entertainment system integrated into a portable computer as recited in claim 1 wherein said antenna and at least one of said television receiver and said radio receiver are built into a display lid.

8. An entertainment system integrated into a portable computer, as recited in claim 2 wherein one of said television receiver and said radio receiver, said compact disk-read only memory (CD-ROM) drive, and said video cassette recorder (VCR) are controlled through user-interface graphic screen displays having icons which mimic conventional controls of a television receiver, radio receiver, compact disk- read only memory (CD-ROM) drive, and video cassette recorder (VCR), respectively.

9. An entertainment system integrated into a portable computer according to any one of claims 2 to 8, wherein said portable computer comprises a built-in microprocessor (10), built-in audio circuit (6), and built-in video display circuit (2) connected to said microprocessor via a system bus (9),
and wherein said television receiver, said AM/FM receiver, and said modular slot are connected to said system bus for communicating, under software control of said microprocessor, audio signals to said built-in audio circuit and video signals to said built-in video display circuit.

10. An entertainment system integrated into a portable computer, as recited in claim 9 wherein said built-in audio circuit comprises an audio mixer for selecting an audio input from one of said television receiver, said AM/FM radio receiver, said compact disk-read only memory (CD-ROM) drive, and said video cassette recorder (VCR) and supplying an audio output to one of an ear phone jack and a power amplifier and speaker.

11. An entertainment system integrated into a portable computer, according to claim 10 wherein said television receiver and said compact disk-read only memory (CD-ROM) drive, and said video cassette recorder (VCR) share a common video display circuit.

12. An entertainment system integrated into a portable computer comprising a plurality of control icons controllable by a user input and fashioned to mimic conventional controls of a television receiver, AM/FM radio receiver, compact disk-read only memory (CD-ROM) drive, and video cassette recorder (VCR), comprising:
function controls for allowing a user to select one of a television receiver, a radio receiver, a compact disk-read only memory (CD-ROM) drive, and an video cassette recorder (VCR);
picture controls for controlling the attributes of a television picture window open on a display screen of said portable computer, said picture controls comprising a contrast control and a brightness control;
audio controls for controlling the attributes of an audio output, said audio controls comprising a volume control, a speaker selector and an ear plug selector; and
mode controls for controlling said compact disk- read only memory (CD-ROM) drive, and said video cassette recorder (VCR), said mode controls comprising a play icon button, a stop/eject icon button, a fast-forward icon button, a rewind icon button, and a pause icon button.

13. An entertainment system integrated into a portable computer as recited in claim 12 wherein said user input is one of a mouse input and a track-point input.

14. An entertainment system integrated into a portable computer as recited in claim 13 wherein said contrast control, said brightness control, and said volume control are icons which can be dragged with said one of a mouse input and a track-point input from a minimum position to a maximum position.
